# EUROPEAN PATENT SPECIFICATION

(11) **EP 1 954 534 B1**
(45) Date of publication and mention of the grant of the patent: **02.09.2009**
(21) Application number: 05812574.1
(22) Date of filing: 01.12.2005
(51) Int. Cl.: B60R 21/16

(54) **AIRBAG SYSTEM**
AIRBAGSYSTEM
SYSTEME D'AIRBAG

(43) Date of publication of application: 13.08.2008
(73) Proprietor: Takata-Petri AG, 63743 Aschaffenburg (DE)
(72) Inventor: BÜHRLEN, Karl-Heinz, 89079 Ulm-Donaustetten (DE); SÖLL, Reiner, 89180 Berghülen (DE); SPÄTH, Martin, 89160 Dornstadt (DE); RIST, Holger, 89160 Dornstadt (DE)
(74) Representative: Baumgärtel, Gunnar
(86) International application number: PCT/EP2005/013049
(87) International publication number: WO 2007/062681

(56) References cited:
- EP-A- 1 462 321
- DE-A1-102005 045 370
- US-A1- 2004 104 563
- US-A1- 2004 188 987

## Description

The present invention relates to an airbag system (e.g. an airbag module) for protecting an occupant in a motor vehicle such as a car in an event of a car crash. More particularly, the present invention relates to an airbag system including a gasbag which is partitioned in two at least a first and a second chamber connected to each other along a connecting portion. In such airbag system, an inflator inflates the gasbag towards an occupant, and the inflated gasbag receives the body of the occupant in an event of a car crash.

In order to inflate both the first and second chamber of the gasbag a mass flow divider is associated with the inflator and arranged in the connecting portion of the gasbag in such a manner that gas generated and ejected by the inflator is guided into both the first and second chamber of the gasbag.

Such airbag system is disclosed in US 6,802,529 B2 and in Japanese patent publication number 2000-177527.

Typically, the two chambers of such gasbag are inflated to a different inner pressure, so that, e.g., the inner pressure of a first chamber of the gasbag is higher than the inner pressure of the second chamber of the gasbag. In this case, the inflator and the mass flow divider may have to be configured in such a way that upon activation of the inflator and inflation of the gasbag more gas is guided into the first chamber than into the second chamber of the gasbag. Alternatively the volume of the first chamber may be chosen smaller than the volume of the second chamber in order to allow a higher inner pressure in the first chamber.

The inflation of a chamber of the gasbag to a comparatively high pressure leads to the problem that the gas flow into the corresponding chamber may damage parts of the covering of the chamber.

Therefore, it is an object of the present invention to provide an airbag system in which a chamber of the gasbag can be inflated to a high pressure without damaging the covering of the gasbag.

According to the present invention at least one protective layer extends from the mass flow divider associated with the inflator into at least the first chamber of the gasbag.

This protective layer assists the mass flow divider in guiding the gas flow into the first chamber of the gasbag.

Document US 2004/0188987 discloses an airbag system comprising a gas bag, an inflator and a mass flow divider.

According to a preferred embodiment of the present invention, the at least one protective layer is designed and arranged in such a manner that it protects those parts of the covering of the first chamber of the gasbag which would otherwise be hit by the gas flow directed into the first chamber, an in particular those parts of the covering adjoining the connecting portion of the gasbag. In other words, the at least one protective layer prevents the gas emerging from the inflator and guided into the first chamber by the mass flow divider from flowing against certain parts of the covering of the first chamber of the gasbag which could be damaged due to the elevated temperature of the gas generated and ejected by the inflator.

According to another aspect of the present invention, the protective layer prevents gas emerging from the inflator and guided into the first chamber by the mass flow divider from flowing against parts of a seam which separates the first chamber from other parts of the gasbag.

Within the present invention, a mass flow divider is an assembly associated with or connected to the inflator (gas generator) in such a manner that gas generated and ejected by the gas generator interacts with the mass flow divider whereby the mass flow divider guides a first part of the gas flow into the first chamber of the gasbag and a second part of the gas flow into at lest one additional (second) chamber of the gasbag.

The mass flow divider may comprise a pipe, e.g., in form of a hollow cylindrical housing, which surrounds at least a part of a rod shaped inflator and in particular those parts of the inflator provided with gas jet ports through which gas may be ejected by the inflator.

Furthermore, the mass flow divider comprises openings through which gas emerging from the inflator is ejected into the first and second chambers of the gasbag, respectively.

There are different options to achieve a higher inner pressure in the first chamber than in the second chamber of the gas bag. For example the openings through which gas is ejected into the first chamber may have a larger cross-section than the openings associated with the second chamber of the gasbag. Another possibility is to provide the first chamber with a volume smaller than that of the second chamber. Additionally or as an alternative the inner pressure of the gasbag chambers can be controlled by forming the chambers with defined leakage rates. Preferably the first chamber is bounded by a sealed seam to generate a high inner pressure within that chamber.

According to one embodiment of the invention at least one opening is provided at the rear and the front end of a mass flow divider in form of a pipe, respectively, wherein one of the openings is associated with the first chamber and the other opening is associated with the second chamber of the gasbag. Alternatively or in addition, such openings may be provided in the jacket of the mass flow divider.

The protective layer projecting from the mass flow divider preferably consists of a flexible material and can be made of a fabric.

According to another aspect of the present invention, the inner pressure in the first chamber produced by gas ejected by the inflator leads to a deformation of the protective layer such that the protective layer closes the connecting portion of the gasbag (passage between the first and second chamber) and prevents gas from flowing from the first chamber through the connecting portion into the second chamber of the gasbag. In this case the protective layer serves as a valve and it is possible to maintain an inner pressure of the first chamber at a higher level compared to the second chamber for a long time.

Thus, the protective layer may serve as an element that protects the covering of the gasbag from the gas flow into the first chamber and at the same time as an element that maintains a difference in the inner pressure of the first chamber of the gasbag on the one hand and the second chamber on the other hand.

More specifically, the portion of the protective layer projecting from the mass flow divider into the first chamber may serve as a guide element guiding the gas flow into the first chamber, as a protective element protecting the covering of the first chamber and as a valve element avoiding a backflow of gas from the first chamber into the second chamber of the gasbag. Of course, the first chamber may be connected to several second chambers which are to be inflated with a lower inner pressure than the first chamber.

The fact that the protective layer extends from the mass flow divider into the first chamber of the gasbag does not necessarily imply that the mass flow divider has to be connected to the mass flow divider. For example, the protective layer may be connected to the inflator and/or the mass flow divider by one or several screws, by one or several clamping elements such as a clamping holder, by one or several rivets or bolts or by any other suitable means to connect a flexible element (protective layer) to a more rigid element (component part of the inflator and/or mass flow divider).

Alternatively, the protective layer may be connected to the gasbag, in particular to the connecting portion of the gasbag or to a portion of the covering of the first chamber of the gasbag, e.g., by means of a seam or by means of an adhesive.

The at least one protective layer may be designed as a protective sleeve surrounding the mass flow divider or being disposed inside the mass flow divider and may have a U-shaped cross-section or a circular cross-section.

The protective layer may be made of a single flexible layer with opposite sides of the flexible layer being at least partially sewn together. Alternatively, the protective layer may consist of a plurality of (at least two) flexible layers sewn together to provide a specific design and cross-section.

The interior and/or exterior faces of the at least one protective layer may be provided with a coating.

The area of the mass flow divider from which the at least one protective layer projects/protrudes into the first chamber of the gasbag may be disposed in the first chamber, in the second chamber or in the connecting portion of the gasbag.

Several embodiments of the present invention will be described below with reference to the accompanying drawings, in which:
- Figure 1: shows a sectional top view of an airbag module comprising a mass flow divider and a protective layer;
- Figure 2a: shows a detailed view of a mass flow divider and a protective layer in a first configuration;
- Figure 2b: shows the mass flow divider of Figure 2a together with a protective layer being in a second configuration;
- Figure 3a: shows a side view of a protective layer connected to an inflator of an airbag module;
- Figure 3b: shows a side view of a protective layer connected to a gasbag of an airbag module;
- Figure 3c: shows a side view of a protective layer connected to a mass flow divider of an airbag module;
- Figure 4a: shows a schematic side and cross sectional view of a first embodiment of a protective layer;
- Figure 4b: shows a schematic side and cross sectional view of a second embodiment of a protective layer;
- Figure 4c: shows a schematic side and cross sectional view of a third embodiment of a protective layer;
- Figure 4d: shows a schematic side and top view of a fourth embodiment of a protective layer;
- Figure 4e: shows a schematic side and top view of a fifth embodiment of a protective layer;
- Figure 4f: shows a schematic side and top view of a sixth embodiment of a protective layer.

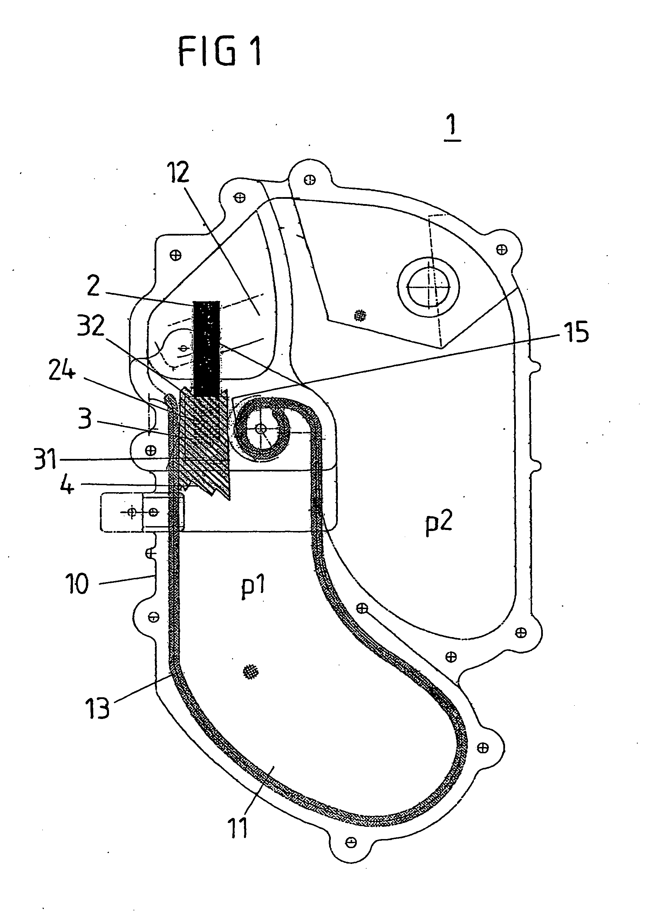

Figure 1 shows a sectional top view of an airbag system (airbag module) according to one embodiment of the invention. The airbag module comprises a gasbag 1 and a rod-shaped inflator 2 for inflating the gasbag 1. The gasbag 1 is partitioned into a first and a second chamber 11, 12, wherein the first chamber is bounded by a seam 13.

The gasbag chambers 11, 12 are connected to each other along a connecting portion 15 of the gasbag 1 which forms a passage between the two chambers 11, 12; the inflator 2 being located in the connecting portion 15.

A cylindrical housing 3 partially surrounds the inflator 2 and operates as a mass flow divider. The cylindrical housing 3 is configured and arranged to distribute gas emerging from the inflator 2 into both the first and the second chamber 11, 12 of the gasbag 1 in such a manner that the first chamber 11 is inflated to an inner pressure p1 which is higher than the pressure p2 of the second chamber 12. For this both opposite ends of the cylindrical housing 3 comprise gas outlets 31, 32 (openings) permitting gas to be ejected into the chambers 11, 12. The volume of the first chamber 11 is smaller than the volume of the second chamber 12, wherein the first chamber is defined by the sealed seam 13. This allows the chamber 11 to be inflated at an inner pressure higher than that of chamber 12.

The cylindrical housing 3 surrounds gas ejection ports 24 of the inflator 2 such as to divide the gas flow ejected by the inflator 2 into two partial gas flows flowing in opposite directions along the longitudinal axis of the cylindrical housing 3 towards its gas outlets 31, 32. From the gas outlets 31, 32 of the cylindrical housing 3 gas is ejected into the chambers 11, 12 of the gasbag 1, respectively.

Because of the different volumes of the chambers 11 and 12 the inner pressure p1 of the first chamber 11 is higher than the inner pressure p2 in the second chamber 12 when inflated by the inflator 2.

The cylindrical housing 3 comprises an attachment clip (not shown) with a borehole for connection to the inflator 2. A threaded bolt (not shown) protrudes from the inflator 2 through the borehole of the attachment clip and connects the cylindrical housing 3 to the inflator 2.

Furthermore, a flexible protective layer 4 is disposed in the connecting portion 15 of the airbag module extending into the high pressure chamber 11 of the gasbag 1. The protective layer 4 is of a cylindrical shape surrounding the cylindrical housing 3 and a portion of the inflator 2. The protective layer 4 protects a part of the covering 10 of the first chamber 11 adjoining the connecting portion 15 of the gasbag 1 and the seam 13 from gases emerging from the inflator 2 and guided into the first chamber 11 by the cylindrical housing 3.

Additionally, the protective layer 4 prevents a backflow of gas from the first chamber 11 (high pressure chamber) into the second chamber 12 (low pressure chamber 12) after inflation of the gasbag 1 since the protective layer 4 is deformed by the inner pressure p1 in the first chamber 11 such that it closes the connecting portion 15 of the gasbag 1.

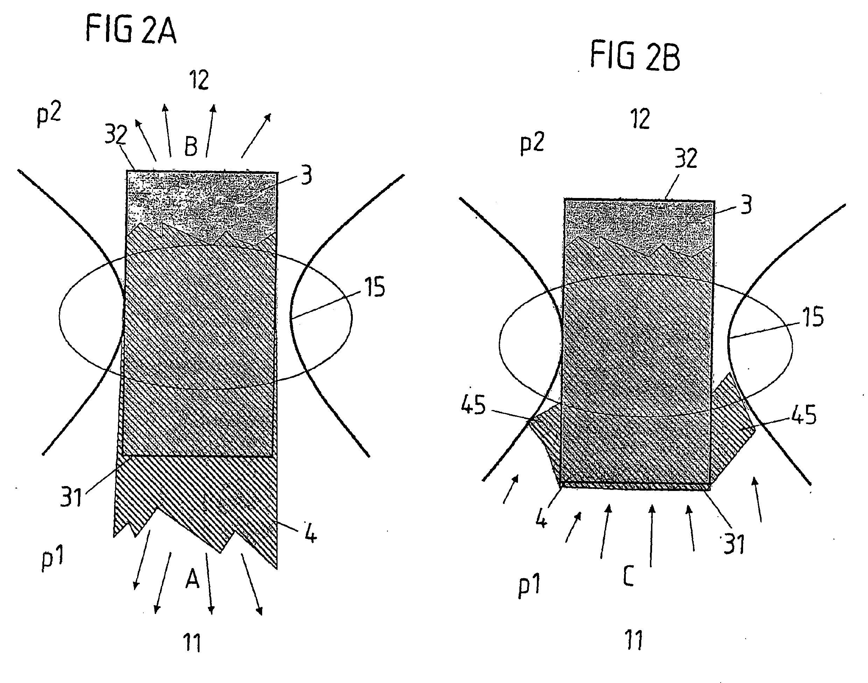

The principle of preventing a backflow from a high pressure chamber of a gasbag employing a protection layer is illustrated in more detail in Figures 2a and 2b. Figure 2a shows a connecting portion 15 forming a passage between two chambers 11, 12 of a gasbag with different inner pressure p1, p2. A mass flow divider formed by a cylindrical housing 3 is located in the connecting portion 15 and is partially surrounded by a protective layer 4 with a hollow-cylindrical shape.

The cylindrical housing 3 divides the gas ejected by an inflator (not shown) into two gas flows inflating the first chamber 11 and the second chamber 12 of a gasbag, respectively. Each end portion of the cylindrical housing 3 defines a gas outlet 31, 32 such that gas emerging from an inflator is ejected into both chambers 11, 12 of the gasbag 1 through these gas outlets 31, 32 along a direction indicated by arrows A and B. The gas outlet 31 of the cylindrical housing 3 associated with the first chamber 11 of the gas bag 1 is configured to permit the first chamber 11 to be inflated with an inner pressure p1 that is higher than the inner pressure p2 of the second chamber 12.

A protective layer 4 associated with the cylindrical housing 3 is made of a flexible material, e.g. a textile fabric. During inflation of the gasbag 1 the portion of the protective layer 4 projecting from the cylindrical housing and extending into the high pressure chamber 11 has an essentially cylindrical shape. Thus, the protective layer 4 cooperates with the cylindrical housing 3 in guiding gas ejected by an inflator into the first chamber 11.

After inflation of the gasbag the first chamber 11 is inflated with a higher inner pressure p1 than the second chamber 12 of the gasbag. This pressure difference tends to generate a gas flow (backflow) from the first chamber 11 through the connecting portion 15 of the gasbag into the second chamber 12 (indicated by arrows C), as shown in Figure 2b. However, due to the increased inner pressure p1 in the first chamber 11 the flexible protective layer 4 is deformed such that the portion 45 of the protective layer 4 projecting from the cylindrical housing 3 into the first chamber 11 is bent backwards, thereby closing the connecting portion 15 of the gasbag. The protective layer 4 thus fulfills the function of a check valve.

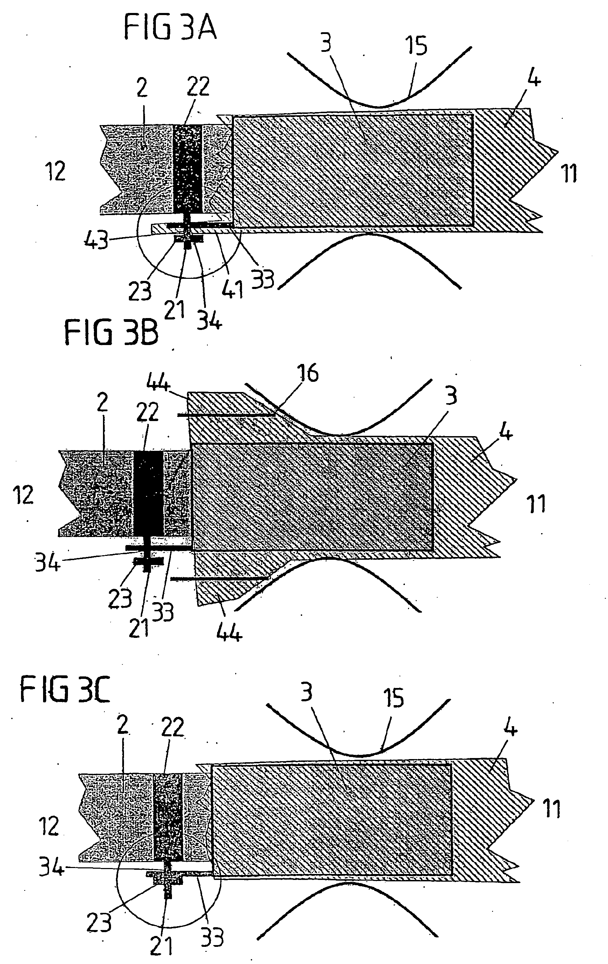

Figures 3a to 3c show different embodiments concerning the arrangement of a protective layer 4 in an airbag module.

According to Figure 3a a mass flow divider formed by a cylindrical housing 3 partially surrounds a rod-shaped inflator 2 that is located in a connection area 15 connecting two chambers 11, 12 of a gasbag.

The cylindrical housing 3 is provided with an attachment clip 33 comprising a bore hole 34 which is used to join the attachment clip 33 to a threaded bolt 21 which is a part of a clamp 22 fastened to the inflator 2. Thus, the cylindrical housing 3 is connected to the inflator 2. Furthermore, the cylindrical housing 3 is surrounded by a protective layer 4 extending into the first chamber 11 of the gas bag. The protective layer 4 has an attachment portion 41 that is fixed to the threaded bolt 21 via an opening 43. Both the cylindrical housing 3 and the protective layer 4 are secured to the threaded bolt 21 by a nut 23.

Additionally, the inflator 2 can be connected (via the threaded bolt 21) to a holder which in turn is joined to a part of the vehicle body.

According to Figure 3b an inflator 2 is connected to a cylindrical housing 3 via a clamp 22 having a threaded bolt 21 that is secured to a clip 33. A protective layer 4 surrounds the cylindrical housing 3 and has one end portion extending into a first chamber 11 of the gasbag. The opposite end portion of the protective layer 4 comprises bulges 44 extending into the second chamber 12 of the gasbag. The bulges 44 are connected to portions of the gasbag (located in front of or behind the drawing plane) by at least one seam 16.

This permits a safe connection of the protective layer 4 with the gasbag. Simultaneously the bulges 44 are configured to prevent a gas flow from a high pressure chamber 11 to a low pressure chamber 12 of the gasbag in order to maintain a constant inner pressure in both chambers 11, 12 of the gasbag.

Although in the illustrated example the bulges of the protective layer are sewn to the gasbag, other means may be employed to join the bulges to the gasbag, such as an adhesive.

According to Figure 3c an inflator 2 and a cylindrical housing 3 are disposed within the connecting portion 15 of a gasbag having two chambers 11, 12. In contrast to the embodiments of protective layers shown in Figures 3a and 3b, however, the protective layer 4 illustrated in Figure 3c does not comprise any specific attachment structures. The protective layer is of a hollow-cylindrical shape with an inner diameter adapted to the outer diameter of the cylindrical housing 3 such that the protective layer is clamped to the cylindrical housing 3 when pushed onto it. In addition clamps or strips (not shown) surrounding the cylindrical protective layer 4 may be used in order to join the protective layer 4 to the cylindrical housing 3.

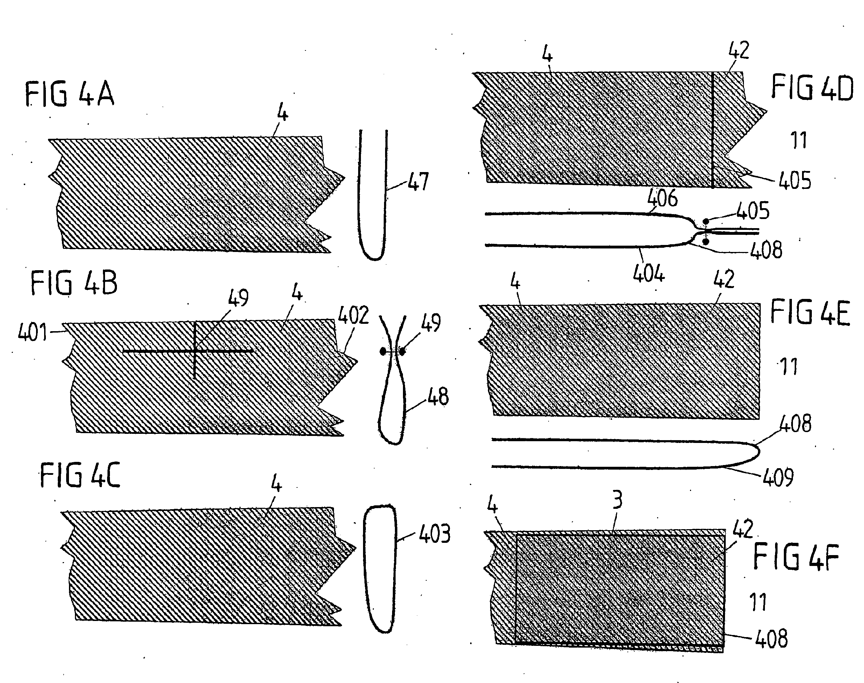

The Figures 4a to 4c illustrate different designs of a protective layer according to the present invention. The protective layer 4 shown in Figure 4a extends longitudinally and has a U-shaped cross section. It can be formed from a flat material 47 such as a textile fabric.

Another embodiment of a protective 4 layer is illustrated in Figure 4b. This protective layer 4 extends longitudinally, has a tubular design and is formed from a textile fabric 48. Opposite sides of the textile fabric 48 are connected with a cross-like seam 49. The cross-like shape of the seam 49 leads to an enhanced flexibility at the end portions 401, 402 of the protective layer 4. This facilitates the connection of one of the end portions to a mass flow divider. In addition, the flexible design of the other end portion of the protective layer 4 which extends into a high pressure chamber (not shown) of the gasbag permits this end portion to be deformed by the high pressure in such a way that it blocks a backflow of gas from the high pressure chamber into a low pressure chamber.

According to Figure 4c a tubular protective layer 4 with a closed cross-section has been produced from a flexible tubular material 403. The diameter of the tubular material 403 can be chosen to fit with outer diameter of a cylindrical mass flow divider (not shown) permitting the protective layer to be secured to the mass flow divider by clamping without additional attachment means.

Further variants of protective layers are illustrated in Figures 4d to 4f. According to Figure 4d a protective layer 4 has a closed end 42 in the high pressure chamber 12 of the gasbag. The protective layer 4 is formed by material layers 404, 406 that are sewn together along a seam 405. The layer 404 has an opening 408 (e.g. formed by a cut) allowing a defined gas flow into the chamber 11. Although the protective layer 4 of Figure 4d has one single opening 408, of course also multiple openings can be provided to adapt the gas flow into the chamber 11.

According to Figure 4e a protective layer 4 has a closed end 42. The protective layer 4 consists of a material layer 409 that is folded to form the closed end 42 located in the high pressure chamber 11 of the gasbag. Similar to the embodiment of Fig. 4d the closed end 42 comprises an opening 408 to define a gas flow into the chamber 11.

Another variant of a protective layer 4 comprising a closed end 42 is shown in Figure 4f. The protective layer 4 is designed tubular surrounding a mass flow divider 3. The closed end 42 of the protective layer 4 comprises outlet openings 408 to permit a predetermined gas flow to be ejected into the chamber 11 of the gasbag.

It is also possible that the closed end of the protective layers as shown in Figures 4d to 4f does not have any openings. In that case openings can be provided at different locations of the protective layer, e.g. also outside the high pressure chamber.
- 1: gasbag
- 10: covering
- 11: high pressure chamber
- 12: low pressure chamber
- 13: seam defining gasbag chambers
- 15: connecting portion
- 16: seam
- 2: inflator
- 21: threaded bolt
- 22: clamp
- 23: nut
- 24: ejection ports
- 3: cylindrical housing
- 31, 32: ends of cylindrical housing
- 33: clip
- 34: bore hole
- 4: protective layer
- 41: attachment portion
- 42: closed end
- 43: opening
- 44: bulge
- 45: deformable portion
- 47: flat material
- 48: textile material
- 49: seam
- 401, 402: ending portion of protective layer
- p1, p2: inner pressure of gasbag chambers

## Claims

1. An airbag system for a motor vehicle, comprising
- an inflatable gasbag (1) having at least a first and a second chamber (11, 12) connected to each other along a connecting portion (15),
- an inflator (2) for inflating the first and second chamber (11, 12) of the gasbag (1) and
- a mass flow divider (3) associated with the inflator (2) and arranged in the connecting portion (15) of the gasbag (1) such that gas ejected by the inflator (2) is guided into both the first and second chamber (11, 12) of the gasbag by the mass flow divider (3),
- at least one protective layer (4) extends from the mass flow divider (3) into the first chamber (11) of the gasbag (1) in such a manner that it protects parts of the covering of the first chamber (11) from the gas flow guided into the first chamber (11) by the mass flow divider (3), wherein
- the airbag system is configured in such a manner that upon inflation the inner pressure in the first chamber (11) is significantly higher than the inner pressure in the second chamber (12) of the gasbag (1),
**characterized in that**
the protective layer (4) consists of a flexible material such that it is deformed by the inner pressure in the first chamber (11) in such a manner that it prevents gas from flowing from the first chamber (11) through the connecting portion (15) into the second chamber (12) of the gasbag (1).

2. The airbag system according to claim 1, **characterized in that** the protective layer (4) assists the mass flow divider (3) in guiding the gas flow into the first chamber (11) of the gasbag (1).

3. The airbag system according to claim 2, **characterized in that** the protective layer (4) prevents gas ejected by the inflator (2) and guided into the first chamber (11) by the mass flow divider (2) from flowing against parts of the covering (10) of the first chamber (11) of the gasbag (1).

4. The airbag system according to one of the preceding claims, **characterized in that** the first chamber (11) of the gasbag (1) is at least partly defined by a seam (13) and that the protective layer (4) is designed and arranged in such a manner that it protects parts of the seam (10) from the gas flow guided into the first chamber (11).

5. The airbag system according to claim 4, **characterized in that** the protective layer (4) prevents gas emerging from the inflator (2) and guided into the first chamber (11) by the mass flow divider (3) from flowing against parts of the seam (10) defining the first chamber (11) of the gasbag (1).

6. The airbag system as claimed in one of the preceding claims , **characterized in that** the protective layer (4) consists of a fabric.

7. The airbag system according to one the preceding claims , **characterized in that** upon inflation of the gasbag (1) the inner pressure (p1) in the first chamber (11) of the gasbag (1) leads to deformation of the protective layer (4) such that the protective layer (4) closes the connecting portion (15) of the gasbag (1).

8. The airbag system as claimed in one of the preceding claims, **characterized in that** the protective layer (4) has a U-shaped cross section.

9. The airbag system as claimed in one of the preceding claims, **characterized in that** the protective layer (4) is formed as a hollow sleeve (3).

10. The airbag system as claimed in one of the preceding claims, **characterized in that** the protective layer (4) has a tubular design.

11. The airbag system as claimed in one of the preceding claims, **characterized in that** the protective layer (4) consists of a flexible layer, opposite sides of the flexible layer being at least partially connected to provide a tubular design.

12. The airbag system as claimed in one of the preceding claims, **characterized in that** the protective layer (4) consists of two flexible layers being at least partially connected to provide a tubular design.

13. The airbag system as claimed in one of the preceding claims, **characterized in that** the protective layer (4) is provided with a coating.

14. The airbag system according to claim 13, **characterized in that** the protective layer (4) defines an interior surface and an outer surface, wherein the interior surface of the protective layer (4) is provided with a coating.

15. The airbag system according to claim 13 or 14, **characterized in that** the protective layer (4) defines an interior surface and an outer surface, wherein the exterior surface of the protective layer (4) is provided with a coating.

16. The airbag system as claimed in one of the preceding claims, **characterized in that** the protective layer (4) is partly disposed inside the mass flow divider (3).

17. The airbag system as claimed in one of the preceding claims, **characterized in that** the protective layer (4) is disposed outside the mass flow divider (3).

18. The airbag system as claimed in one of the preceding claims, **characterized in that** a portion of the protective layer (4) extending into the first chamber (11) of the gasbag (1) is provided with an opening through which gas may pass into the first chamber (11).

19. The airbag system as claimed in one of the preceding claims, **characterized in that** a portion of the protective layer (4) extending into the first chamber (11) of the gasbag (1) comprises a closed end (42).

20. The airbag system according to claim 18, **characterized in that** the closed end (42) is formed by sewing or folding the portion of the protective layer (4) extending into the first chamber (11) of the gasbag (1).

21. The airbag system as claimed in one of the preceding claims, **characterized in that** the protective layer (4) is connected to the inflator (2).

22. The airbag system as claimed in one of the preceding claims, **characterized in that** the protective layer (4) is connected to the mass flow divider (3).

23. The airbag system according to claims 21 or 22, **characterized in that** the protective layer (4) is fastened by means of a screw, clamp or tight connection.

24. The airbag system as claimed in one of the preceding claims, **characterized in that** the protective layer (4) is connected to the gasbag (1).

25. The airbag system as claimed in one of the preceding claims, **characterized in that** the protective layer (4) is connected to the connecting portion (15) of the gasbag (1).

26. The airbag system according to claims 24 or 25, **characterized in that** the protective layer (4) is connected to the gasbag (1) by a seam or an adhesive.

27. The airbag system as claimed in one of the preceding claims, **characterized in that** the mass flow divider (3) is formed as a hollow sleeve (3).

28. The airbag system as claimed in one of the preceding claims, **characterized in that** the mass flow divider (3) has a tubular design.

29. The airbag system as claimed in one of the preceding claims, **characterized in that** the mass flow divider (3) and the protective layer (4) represent two separate parts.

30. The airbag system as claimed in one of the preceding claims, **characterized in that** the mass flow divider (3) has a dimensionally stable design.

31. The airbag system as claimed in one of the preceding claims, **characterized in that** the mass flow divider (3) is formed of a substantially rigid material.

32. The airbag system according to claims 1 to 29, **characterized in that** the mass flow divider (3) is formed of a flexible material.

33. The airbag system according to claims 1 to 29, **characterized in that** the mass flow divider (3) comprises attachment structures permitting a connection to the inflator (2) or another part of the airbag system.

34. The airbag system according to claims 32 or 33, **characterized in that** the protective layer (4) is connected to the mass flow divider (3) by a seam or an adhesive.

## Patentansprüche

1. Airbagsystem für ein Fahrzeug, mit
- einem aufblasbaren Gassack (1), der mindestens eine erste und eine zweite Kammer (11, 12) aufweist, die entlang eines Verbindungsabschnitts (15) miteinander verbunden sind,
- einem Gasgenerator (2) zum Aufblasen der ersten und zweiten Kammer (11, 12) des Gassacks (1) und
- einem Masseflussteiler (3), der dem Gasgenerator (2) zugeordnet und in dem Verbindungsabschnitt (15) des Gassacks (1) angeordnet ist, so dass vom Gasgenerator (2) ausgestoßenes Gas durch den Masseflussteiler (3) sowohl in die erste als auch in die zweite Kammer (11, 12) des Gassacks geleitet wird,
- mindestens eine Schutzlage (4) erstreckt sich derart von dem Masseflussteiler (3) in die erste Kammer (11) des Gassacks (1), dass sie Teile der Hülle der ersten Kammer (11) gegen den durch den Masseflussteiler (3) in die erste Kammer (11) geleiteten Gasstrom schützt, wobei
- das Airbagsystem so ausgebildet ist, dass nach dem Aufblasen der Innendruck in der ersten Kammer (11) deutlich höher ist als der Innendruck in der zweiten Kammer (12) des Gassacks (1),
**dadurch gekennzeichnet, dass**
die Schutzlage (4) aus einem flexiblen Material besteht, so dass sie durch den Innendruck in der ersten Kammer (11) derart deformiert wird, dass sie verhindert, dass Gas über den Verbindungsabschnitt (15) aus der ersten Kammer (11) in die zweite Kammer (15) strömt.

2. Airbagsystem gemäß Anspruch 1, **dadurch gekennzeichnet, dass** die Schutzlage (4) den Masseflussteiler (3) beim Leiten des Gasflusses in die erste Kammer (11) des Gassacks (1) unterstützt.

3. Airbagsystem gemäß Anspruch 2, **dadurch gekennzeichnet, dass** die Schutzlage (4) verhindert, dass vom Gasgenerator (2) ausgestoßenes und durch den Masseflussteiler (3) in die erste Kammer (11) geleitetes Gas gegen Teile der Hülle (10) der ersten Kammer (11) des Gassacks (1) strömt.

4. Airbagsystem gemäß einem der vorhergehenden Ansprüche, **dadurch gekennzeichnet, dass** die erste Kammer (11) des Gassacks (1) zumindest teilweise durch eine Naht (13) begrenzt ist und dass die Schutzlage (4) so ausgestaltet und angeordnet ist, dass sie Teile der Naht (10) vor dem in die erste Kammer (11) geleiteten Gasfluss schützt.

5. Airbagsystem gemäß Anspruch 4, **dadurch gekennzeichnet, dass** die Schutzlage (4) verhindert, dass vom Gasgenerator (2) ausgehendes und durch den Masseflussteiler (3) in die erste Kammer (11) geleitetes Gas gegen Teile der die erste Kammer begrenzenden Naht (10) strömt.

6. Airbagsystem gemäß einem der vorhergehenden Ansprüche, **dadurch gekennzeichnet, dass** die Schutzlage (4) aus einem Gewebe besteht.

7. Airbagsystem gemäß einem der vorhergehenden Ansprüche, **dadurch gekennzeichnet, dass** nach Aufblasen des Gassacks (1) der Innendruck (p1) in der ersten Kammer (11) des Gassacks (1) zu einer Deformierung der Schutzlage (4) führt, so dass die Schutzlage (4) den Verbindungsabschnitt (15) des Gassacks verschließt.

8. Airbagsystem gemäß einem der vorhergehenden Ansprüche, **dadurch gekennzeichnet, dass** die Schutzlage (4) einen U-förmigen Querschnitt hat.

9. Airbagsystem gemäß einem der vorhergehenden Ansprüche, **dadurch gekennzeichnet, dass** die Schutzlage (4) als Hülse (3) ausgebildet ist.

10. Airbagsystem gemäß einem der vorhergehenden Ansprüche, **dadurch gekennzeichnet, dass** die Schutzlage (4) eine röhrenartige Gestalt hat.

11. Airbagsystem gemäß einem der vorhergehenden Ansprüche, **dadurch gekennzeichnet, dass** die Schutzlage (4) aus einer flexiblen Lage besteht, wobei gegenüberliegende Seiten der flexiblen Lage zumindest teilweise verbunden sind, um eine röhrenartige Gestalt zu schaffen.

12. Airbagsystem gemäß einem der vorhergehenden Ansprüche, **dadurch gekennzeichnet, dass** die Schutzlage (4) aus zwei flexiblen Lagen besteht, die zumindest teilweise verbunden sind, um eine röhrenartige Gestalt zu schaffen.

13. Airbagsystem gemäß einem der vorhergehenden Ansprüche, **dadurch gekennzeichnet, dass** die Schutzlage (4) eine Beschichtung aufweist.

14. Airbagsystem gemäß Anspruch 13, **dadurch gekennzeichnet, dass** die Schutzlage (4) eine innere Oberfläche und eine äußere Oberfläche definiert, wobei die innere Oberfläche der Schutzlage (4) eine Beschichtung aufweist.

15. Airbagsystem gemäß Anspruch 13 oder 14, **dadurch gekennzeichnet, dass** die Schutzlage (4) eine innere Oberfläche und eine äußere Oberfläche definiert, wobei die äußere Oberfläche der Schutzlage (4) eine Beschichtung aufweist.

16. Airbagsystem gemäß einem der vorhergehenden Ansprüche, **dadurch gekennzeichnet, dass** die Schutzlage (4) teilweise innerhalb des Masseflussteilers (3) angeordnet ist.

17. Airbagsystem gemäß einem der vorhergehenden Ansprüche, **dadurch gekennzeichnet, dass** die Schutzlage (4) außerhalb des Masseflussteilers (3) angeordnet ist.

18. Airbagsystem gemäß einem der vorhergehenden Ansprüche, **dadurch gekennzeichnet, dass** ein Abschnitt der sich in die erste Kammer (11) hinein erstreckenden Schutzlage (4) des Gassacks (1) mit einer Öffnung versehen ist, durch die Gas in die erste Kammer (11) gelangen kann.

19. Airbagsystem gemäß einem der vorhergehenden Ansprüche, **dadurch gekennzeichnet, dass** ein Abschnitt der sich in die erste Kammer (11) hinein erstreckenden Schutzlage (4) des Gassacks (1) ein geschlossenes Ende (42) aufweist.

20. Airbagsystem gemäß Anspruch 18, **dadurch gekennzeichnet, dass** das geschlossene Ende (42) durch Vernähen oder Falten des sich in die erste Kammer (11) des Gassacks (1) hinein erstreckenden Abschnitts der Schutzlage (4) gebildet wird.

21. Airbagsystem gemäß einem der vorhergehenden Ansprüche, **dadurch gekennzeichnet, dass** die Schutzlage (4) mit dem Gasgenerator (2) verbunden ist.

22. Airbagsystem gemäß einem der vorhergehenden Ansprüche, **dadurch gekennzeichnet, dass** die Schutzlage (4) mit dem Masseflussteiler (3) verbunden ist.

23. Airbagsystem gemäß Anspruch 21 oder 22, **dadurch gekennzeichnet, dass** die Schutzlage (4) mittels einer Schraub-, Klemm- oder Zugverbindung befestigt ist.

24. Airbagsystem gemäß einem der vorhergehenden Ansprüche, **dadurch gekennzeichnet, dass** die Schutzlage (4) mit dem Gassack (1) verbunden ist.

25. Airbagsystem gemäß einem der vorhergehenden Ansprüche, **dadurch gekennzeichnet, dass** die Schutzlage (4) mit dem Verbindungsabschnitt (15) des Gassacks
(1) verbunden ist.

26. Airbagsystem gemäß Anspruch 24 oder 25, **dadurch gekennzeichnet, dass** die Schutzlage (4) mit dem Gassack (1) über eine Naht oder einen Klebstoff verbunden ist.

27. Airbagsystem gemäß einem der vorhergehenden Ansprüche, **dadurch gekennzeichnet, dass** der Masseflussteiler (3) als Hülse (3) ausgebildet ist.

28. Airbagsystem gemäß einem der vorhergehenden Ansprüche, **dadurch gekennzeichnet, dass** der Masseflussteiler (3) eine röhrenartige Gestalt hat.

29. Airbagsystem gemäß einem der vorhergehenden Ansprüche, **dadurch gekennzeichnet, dass** der Masseflussteiler (3) und die Schutzlage (4) zwei separate Teile darstellen.

30. Airbagsystem gemäß einem der vorhergehenden Ansprüche, **dadurch gekennzeichnet, dass** der Masseflussteiler (3) eine formstabile Gestalt hat.

31. Airbagsystem gemäß einem der vorhergehenden Ansprüche, **dadurch gekennzeichnet, dass** der Masseflussteiler (3) aus einem im Wesentlichen steifen Material gebildet ist.

32. Airbagsystem gemäß einem der vorhergehenden Ansprüche, **dadurch gekennzeichnet, dass** der Masseflussteiler (3) aus einem flexiblen Material gebildet ist.

33. Airbagsystem gemäß einem der Ansprüche 1 bis 29, **dadurch gekennzeichnet, dass** der Masseflussteiler (3) Befestigungsstrukturen aufweist, die eine Verbindung mit dem Gasgenerator (2) oder einem anderen Teil des Airbagsystems ermöglichen.

34. Airbagsystem gemäß Anspruch 32 oder 33, **dadurch gekennzeichnet, dass** die Schutzlage (4) mit dem Masseflussteiler (3) über eine Naht oder einen Klebstoff verbunden ist.

## Revendications

1. Système d'airbag pour un véhicule à moteur comprenant
- un coussin de sécurité gonflable (1) ayant au moins une première et une deuxième chambres (11, 12) reliées l'une à l'autre le long d'une portion de raccordement (15),
- un dispositif de gonflage (2) pour gonfler les première et deuxième chambres (11, 12) du coussin de sécurité gonflable (1) et
- un répartiteur de débit massique (3) associé au dispositif de gonflage (2) et agencé dans la portion de raccordement (15) du coussin de sécurité gonflable (1) de sorte que le gaz éjecté par le dispositif de gonflage (2) soit guidé dans les première et deuxième chambres (11, 12) du coussin de sécurité gonflable par le répartiteur de débit massique (3),
- au moins une couche de protection (4) s'étendant depuis le répartiteur de débit massique (3) dans la première chambre (11) du coussin de sécurité gonflable (1) de telle manière qu'elle protège des parties du revêtement de la première chambre (11) du flux de gaz guidé dans la première chambre (11) par le répartiteur de débit massique (3), dans lequel
- le système d'airbag est configuré de manière que, lors du gonflage, la pression interne dans la première chambre (11) soit nettement supérieure à la pression interne dans la deuxième chambre (12) du coussin de sécurité gonflable (1),
**caractérisé en ce que**
la couche de protection (4) consiste en un matériau flexible de sorte qu'il soit déformé par la pression interne dans la première chambre (11) de manière qu'il empêche le gaz de s'écouler de la première chambre (11) vers la deuxième chambre (12) du coussin de sécurité gonflable (1) en passant par la portion de raccordement (15).

2. Système d'airbag selon la revendication 1, **caractérisé en ce que** la couche de protection (4) aide le répartiteur de débit massique (3) à guider le flux de gaz dans la première chambre (11) du coussin de sécurité gonflable (1).

3. Système d'airbag selon la revendication 2, **caractérisé en ce que** la couche de protection (4) empêche le gaz éjecté par le dispositif de gonflage (2) et guidé dans la première chambre (11) par le répartiteur de débit massique (3) de s'écouler contre des parties du revêtement (10) de la première chambre (11) du coussin de sécurité gonflable (1).

4. Système d'airbag selon l'une des revendications précédentes, **caractérisé en ce que** la première chambre (11) du coussin de sécurité gonflable (1) est au moins en partie définie par une couture (13) et **en ce que** la couche de protection (4) est conçue et agencée de telle manière qu'elle protège des parties de la couture (13) du flux de gaz guidé dans la première chambre (11).

5. Système d'airbag selon la revendication 4, **caractérisé en ce que** la couche de protection (4) empêche le gaz sortant du dispositif de gonflage (2) et guidé dans la première chambre (11) par le répartiteur de débit massique (3) de s'écouler contre des parties de la couture (13) définissant la première chambre (11) du coussin de sécurité gonflable (1).

6. Système d'airbag selon l'une des revendications précédentes, **caractérisé en ce que** la couche de protection (4) est constituée d'un tissu.

7. Système d'airbag selon l'une des revendications précédentes, **caractérisé en ce que,** lors du gonflage du coussin de sécurité gonflable (1), la pression interne (p1) dans la première chambre (11) du coussin de sécurité gonflable (1) provoque une déformation de la couche de protection (4) de sorte que la couche de protection (4) ferme la portion de raccordement (15) du coussin de sécurité gonflable (1).

8. Système d'airbag selon l'une des revendications précédentes, **caractérisé en ce que** la couche de protection (4) a une section transversale en U.

9. Système d'airbag selon l'une des revendications précédentes, **caractérisé en ce que** la couche de protection (4) a la forme d'un manchon creux (3).

10. Système d'airbag selon l'une des revendications précédentes, **caractérisé en ce que** la couche de protection (4) a une conception tubulaire.

11. Système d'airbag selon l'une des revendications précédentes, **caractérisé en ce que** la couche de protection (4) se compose d'une couche flexible, des côtés opposés de la couche flexible étant au moins en partie reliés afin de fournir une conception tubulaire.

12. Système d'airbag selon l'une des revendications précédentes, **caractérisé en ce que** la couche de protection (4) se compose de deux couches flexibles étant au moins en partie reliées afin de fournir une conception tubulaire.

13. Système d'airbag selon l'une des revendications précédentes, **caractérisé en ce que** la couche de protection (4) est munie d'un revêtement.

14. Système d'airbag selon la revendication 13, **caractérisé en ce que** la couche de protection (4) définit une surface intérieure et une surface extérieure, la surface intérieure de la couche de protection (4) étant munie d'un revêtement.

15. Système d'airbag selon la revendication 13 ou 14, **caractérisé en ce que** la couche de protection (4) définit une surface intérieure et une surface extérieure, la surface extérieure de la couche de protection (4) étant munie d'un revêtement.

16. Système d'airbag selon l'une des revendications précédentes, **caractérisé en ce que** la couche de protection (4) est en partie disposée à l'intérieur du répartiteur de débit massique (3).

17. Système d'airbag selon l'une des revendications précédentes, **caractérisé en ce que** la couche de protection (4) est disposée à l'extérieur du répartiteur de débit massique (3).

18. Système d'airbag selon l'une des revendications précédentes, **caractérisé en ce qu'**une portion de la couche de protection (4) s'étendant dans la première chambre (11) du coussin de sécurité gonflable (1) est munie d'une ouverture par laquelle le gaz peut passer dans la première chambre (11).

19. Système d'airbag selon l'une des revendications précédentes, **caractérisé en ce qu'**une portion de la couche de protection (4) s'étendant dans la première chambre (11) du coussin de sécurité gonflable (1) comprend une extrémité fermée (42).

20. Système d'airbag selon la revendication 18, **caractérisé en ce que** l'extrémité fermée (42) est formée en cousant ou en pliant la portion de la couche de protection (4) s'étendant dans la première chambre (11) du coussin de sécurité gonflable (1).

21. Système d'airbag selon l'une des revendications précédentes, **caractérisé en ce que** la couche de protection (4) est raccordée au dispositif de gonflage (2).

22. Système d'airbag selon l'une des revendications précédentes, **caractérisé en ce que** la couche de protection (4) est raccordée au répartiteur de débit massique (3).

23. Système d'airbag selon la revendication 21 ou 22, **caractérisé en ce que** la couche de protection (4) est fixée au moyen d'une connexion à vis, d'un collier de serrage ou d'un raccord ajusté.

24. Système d'airbag selon l'une des revendications précédentes, **caractérisé en ce que** la couche de protection (4) est raccordée au coussin de sécurité gonflable (1).

25. Système d'airbag selon l'une des revendications précédentes, **caractérisé en ce que** la couche de protection (4) est raccordée à la portion de raccordement (15) du coussin de sécurité gonflable (1).

26. Système d'airbag selon la revendication 24 ou 25, **caractérisé en ce que** la couche de protection (4) est raccordée au coussin de sécurité gonflable (1) par une couture ou par un adhésif.

27. Système d'airbag selon l'une des revendications précédentes, **caractérisé en ce que** le répartiteur de débit massique (3) a la forme d'un manchon creux (3).

28. Système d'airbag selon l'une des revendications précédentes, **caractérisé en ce que** le répartiteur de débit massique (3) a une conception tubulaire.

29. Système d'airbag selon l'une des revendications précédentes, **caractérisé en ce que** le répartiteur de débit massique (3) et la couche de protection (4) représentent deux parties séparées.

30. Système d'airbag selon l'une des revendications précédentes, **caractérisé en ce que** le répartiteur de débit massique (3) a une conception dimensionnellement stable.

31. Système d'airbag selon l'une des revendications précédentes, **caractérisé en ce que** le répartiteur de débit massique (3) est formé d'un matériau sensiblement rigide.

32. Système d'airbag selon l'une des revendications 1 à 29, **caractérisé en ce que** le répartiteur de débit massique (3) est formé d'un matériau flexible.

33. Système d'airbag selon l'une des revendications 1 à 29, **caractérisé en ce que** le répartiteur de débit massique (3) comprend des structures de fixation permettant un raccordement au dispositif de gonflage (2) ou à une autre partie du système d'airbag.

34. Système d'airbag selon les revendications 32 ou 33, **caractérisé en ce que** la couche de protection (4) est raccordée au répartiteur de débit massique (3) par une couture ou par un adhésif.
